## Europäisches Patentamt

## European Patent Office

## Office européen des brevets

(11) Veröffentlichungsnummer: **0 316 521 B1**

(12) # EUROPÄISCHE PATENTSCHRIFT

(45) Veröffentlichungstag der Patentschrift: 06.11.91

(51) Int. Cl.⁵: **F16D 65/18**, F16D 55/224

(21) Anmeldenummer: 88113649.3

(22) Anmeldetag: 23.08.88

(54) **Bremsvorrichtung.**

(30) Priorität: 14.11.87 DE 3738764

(43) Veröffentlichungstag der Anmeldung:
24.05.89 Patentblatt 89/21

(45) Bekanntmachung des Hinweises auf die
Patenterteilung:
06.11.91 Patentblatt 91/45

(84) Benannte Vertragsstaaten:
**DE FR GB IT SE**

(56) Entgegenhaltungen:
**EP-A- 0 113 214**
**DE-A- 2 412 542**
**US-A- 3 703 944**

(73) Patentinhaber: **Dr.Ing.h.c. F. Porsche Aktiengesellschaft**
**Porschestrasse 42**
**W-7000 Stuttgart 40(DE)**

(72) Erfinder: **Shaw, Steven, Dipl.-Ing.**
**Huettenstrasse 15**
**W-7000 Stuuttgart 31(DE)**
Erfinder: **Weiss, Elmar**
**Backhausgasse 10**
**W-7131 Wurmberg(DE)**

## Beschreibung

Die Erfindung bezieht sich auf eine Bremsvorrichtung nach dem Oberbegriff des Anspruchs 1.

Scheibenbremsen können beim Bremsvorgang zum Quietschen neigen, was im wesentlichen durch eine oszillierende Bewegung des Bremssattels sowie der Bremsbacken hervorgerufen wird. Durch diese Bewegungen können an der Bremseinrichtung Schwingungen entstehen, die einen Schall abstrahlen, der für das menschliche Ohr als sogenanntes "Quietschen" wahrnehmbar wird.

Aus der US-PS 3,703,944 ist eine Scheibenbremse bekannt geworden, die einen mit den Betätigungskolben verbundenen Flansch umfaßt, der anliegend an der Rückseite einer Bremsbacke ist und sich teilweise in eine Bohrung des Kolbens erstreckt.

Der Erfindung liegt die Aufgabe zugrunde, ein Bremsenquietschen bei einer Betätigung zu unterdrücken.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch ein baulich einfaches Teil, welches in eine meistens vorhandene Bohrung des Betätigungskolbens einsetzbar ist, ein Bremsenquietschen durch eine Schwingungsminderung und durch eine Dämpfung unterbunden wird. Diese Dämpfung erfolgt im wesentlichen durch eine reibende Verbindung zwischen dem Einsatzteil und dem Kolben sowie dem Einsatzteil und der Bremsbacke, wobei durch das locker in der Bohrung des Betätigungskolbens sitzende Einsatzteil infolge eines ruckartigen Anschlagens an die Innenumfangsfläche des Kolbens die Frequenz der Schwingungsenergie beim Bremsvorgang umgesetzt wird von der Quietschfrequenz in eine breitbandige Energie mit geringerer Schwingungsamplitude. Ferner wird über die bewegten Massen in den Betätigungskolben eine Gegenkraft auf die Bremsbeläge ausgeübt.

Ein Ausführungsbeispiel der Erfindung ist in der Zeichnung dargestellt und wird im folgenden näher beschreiben.

Es zeigen

Fig. 1    eine Draufsicht auf eine Scheibenbremse mit Betätigungskolben und Einsatzteilen und

Fig. 2    eine vergrößerte Darstellung des Betätigungskolbens mit dem Einsatzteil.

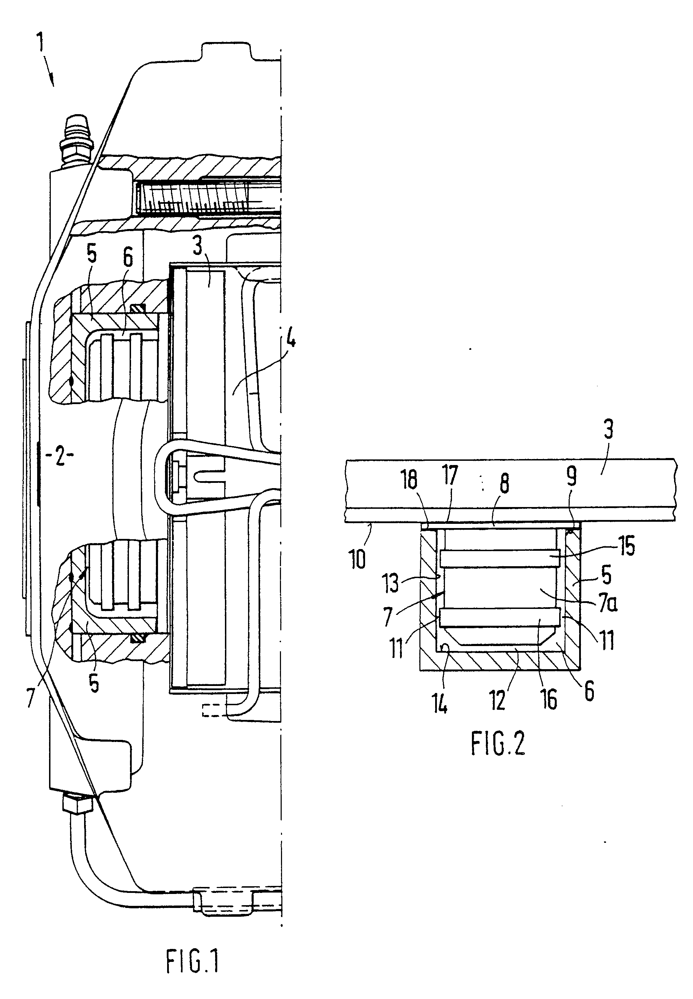

Fig. 1 zeigt eine Bremsvorrichtung 1 eines Fahrzeugrades, die einen Bremssattel 2 mit geführten Bremsbacken 3 umfaßt, zwischen denen eine Bremsscheibe 4 angeordnet ist. Über hydraulisch beaufschlagbare Betätigungskolben 5 werden diese beim Bremsvorgang gegen die Bremsscheibe 4 gepreßt.

In jedem Betätigungskolben 5 ist eine der Bremsbacke 3 zugerichtete konzentrische Bohrung 6 vorgesehen, in der ein zylinderförmiges Einsatzteil 7 angeordnet ist. Es umfaßt an seinem der Bremsbacke 3 zugerichtetem vorderen Ende einen Flansch 8, der die Kolbenstirnfläche 9 überdeckt und der Bremsbackenfläche 10 unmittelbar gegenübersteht. Der zylinderförmige Abschnitt 7a des Einsatzteils 7 ist mit einem radialen Spiel 11 zur Innenumfangsfläche 13 und mit einem axialen Spiel zur Bodenfläche 14 in der Bohrung 6 gehalten, wobei es sich nur über den Flansch 8 zur Kolbenstirnfläche 9 hin abstützt.

Das Einsatzteil 7 weist an seinem zylinderförmigen Abschnitt 7a erhabene Umfangsbereiche in Form von konzentrischen Ringen 15 und 16 auf, die im Abstand zueinander angeordnet sind und bei einer oszillierenden Bewegung des Bremssattels 2 der Bohrung 6 Anstoßpunkte zum Betätigungskolben bilden.

Die Außenfläche 17 vom Flansch 8 des Einsatzteils 7 steht mit der Fläche 10 der Bremsbacke 3 in einer reibenden Verbindung, genauso wie die Innenfläche 18 des Flansches 8 auf der Kolbenstirnfläche 9 in einer reibenden Verbindung steht.

Das Einsatzteil 7 besteht gegenüber dem aus einem Leichtmetall hergestellten Kolben aus einem Metall relativ hohen spezifischen Gewichts wie z. B. aus Kupfer, Eisen oder einem ähnlichen Metall.

Bei einem Bremsvorgang wird der Bremssattel 2 zu oszillierenden Bewegungen angeregt, d. h. der Sattel 2 wird in einem schnellen Wechsel in den möglichen räumlichen Ebenen verschwenkt. Während dieser Bewegungen des Sattels 2 wird sich das aus einer Masse relativ hohen Gewichts bestehende Einsatzteil 7 in der Bohrung 6 des Betätigungskolbens 5 im Rahmen seines radialen und axialen Spiels entsprechend bewegen und mit mindestens einem Ring 15 oder 16 ruckartig gegen die Kolbenwandung stoßen und die Schwingungsfrequenz ändern bzw. umsetzen. Zusätzlich erfolgt über die reibende Bewegung des Flansches 8 am Kolben 5 und an der Fläche 10 der Bremsbacke 3 eine Schwingungsdämpfung durch eine Energieaufnahme.

## Patentansprüche

1.    Festsattelscheibenbremse für ein Fahrzeug mit in einem Bremssattel (2) zu beiden Seiten einer Bremsscheibe (4) geführten Bremsbacken (3), die mit hydraulisch beaufschlagbaren Betätigungskolben (5) mit der Bremsbacke zugerichteter Bohrung (6) der Bremse (1) in Verbindung stehen, welche einen die Kolbenstirnfläche überdeckenden Flansch (8) aufweisen, **da-**

**durch gekennzeichnet,** daß an dem Flansch (8) ein sich in den Kolben (5) erstreckendes zylinderförmiges Einsatzteil (7) angeordnet ist, welches zur Innenumfangs- und Bodenfläche (13, 14) der Bohrung (6) mit radialem und axialem Spiel (11, 12) gehalten ist.

2. Festsattelscheibenbremse nach Anspruch 1, **dadurch gekennzeichnet,** daß das Einsatzteil (7) erhabene Umfangsbereiche (Ringe 15, 16) aufweist, die zur Innenumfangsfläche (13) der Bohrung (6) Kontaktflächen bilden.

3. Festsattelscheibenbremse nach den Ansprüchen 1 oder 2, **dadurch gekennzeichnet,** daß die Innenumfangsfläche (18) des Flansches (8) zur Stirnfläche (9) des Betätigungskolbens (5) und die Außenfläche (17) des Flansches (8) zur gegenüberstehenden Fläche (10) der Bremsbacke (3) in einer reibenden Verbindung steht.

4. Festsattelscheibenbremse nach den Ansprüchen 1, 2 oder 3, **dadurch gekennzeichnet,** daß das Einsatzteil (7) aus einem Metall relativ hohen spezifischen Gewichts besteht.

5. Festsattelscheibenbremse nach Anspruch 4, **dadurch gekennzeichnet,** daß das Einsatzteil (7) aus Kupfer besteht.

6. Festsattelscheibenbremse nach einem oder mehreren der vorhergehenden Ansprüche, **dadurch gekennzeichnet,** daß der Betätigungskolben (5) aus einem Leichtmetall und das Einsatzteil (7) aus einem Metall relativ hohen spezifischen Gewichts besteht.

## Claims

1. A fixed-yoke disc brake for a vehicle, having brake pads (3) guided in a brake yoke (2) on both sides of a brake disc (4) and connected to actuating pistons (5) by [a] bore (6) of the brake (1) facing the brake pad, the actuating pistons (5) being adapted to be acted upon hydraulically and having a flange (8) covering the end face of the piston, characterized in that a cylindrical insert part (7), extending in the pistons (5) and held with radial and axial clearance with respect to the inner peripheral and base face (13, 14) of the bore (6), is mounted on the flange (8).

2. A fixed-yoke disc brake according to Claim 1, characterized in that the insert part (7) has raised peripheral areas (rings 15, 16) which form contact surfaces with the inner peripheral face (13) of the bore (6).

3. A fixed-yoke disc brake according to Claim 1 or 2, characterized in that the inner peripheral surface (18) of the flange (8) is connected by friction to the end surface (9) of the actuating piston (5) and the outer surface (17) of the flange (8) to the opposite surface (10) of the brake pad (3).

4. A fixed-yoke disc brake according to Claim 1, 2 or 3, characterized in that the insert part (7) consists of a metal of relatively high specific weight.

5. A fixed-yoke disc brake according to Claim 4, characterized in that the insert part (7) consists of copper.

6. A fixed-yoke disc brake according to one or more of the preceding Claims, characterized in that the actuating piston (5) consists of a light metal and the insert part (7) of a metal of relatively high specific weight.

## Revendications

1. Frein à disque à étrier fixe pour un véhicule automobile comportant une mâchoire de frein (3) guidée dans un étrier de frein (2) des deux côtés d'un disque de frein (4), lesquelles mâchoires sont reliées à des pistons d'actionnement (5) du frein (1), à commande hydraulique, avec alésage (6) tourné vers la mâchoire de frein, lesquels pistons présentent une bride (8) recouvrant la face frontale de piston, caractérisé en ce qu'il est placé sur la bride (8), un insert cylindrique (7), s'étendant dans le piston (5), qui est maintenu avec un jeu radial et axial (11, 12) par rapport à la surface intérieure périphérique et à la surface de fond (13, 14) de l'alésage (6).

2. Frein à disque à étrier fixe selon la revendication 1, caractérisé en ce que l' insert (7) présente des zones périphériques en relief (anneaux 15, 16) qui forment des surfaces de contact avec la surface périphérique intérieure (13) de l'alésage (6).

3. Frein à disque à étrier fixe selon la revendication 1 ou 2, caractérisé en ce que la surface périphérique intérieure (18) de la bride (8) est en liaison de friction avec la face frontale (9) du piston d' actionnement (5) et en ce que la surface extérieure (17) de la bride (8) est en liaison de friction avec la surface saillante (10) de la mâchoire de frein (3).

4. Frein à disque à étrier fixe selon les revendications 1, 2 ou 3, caractérisé en ce que l'insert (7) est réalisé dans un métal de poids spécifique relativement élevé.

5. Frein à disque à étrier fixe selon la revendication 4, caractérisé en ce que l'insert (7) est en cuivre.

6. Frein à disque à étrier fixe selon une ou plusieurs des revendications précédentes, caractérisé en ce que le piston d'actionnement (5) est réalisé dans un métal léger et l'insert (7) dans un métal de poids spécifique relativement élevé.

FIG.1

FIG.2